Europäisches Patentamt

European Patent Office

Office européen des brevets

(19)

(11) Publication number : **0 221 665**
**B1**

(12) # EUROPEAN PATENT SPECIFICATION

(45) Date of publication of patent specification :
30.11.88

(21) Application number : 86307439.9

(22) Date of filing : 29.09.86

(51) Int. Cl.⁴ : **B 62 D   5/04**

(54) **Power-assisted rack and pinion steering gear.**

(30) Priority : 17.10.85 US 788477

(43) Date of publication of application :
13.05.87 Bulletin 87/20

(45) Publication of the grant of the patent :
30.11.88 Bulletin 88/48

(84) Designated contracting states :
DE FR GB

(56) References cited :
EP-A- 0 133 003
US-A- 3 716 110
US-A- 4 415 054

(73) Proprietor : **GENERAL MOTORS CORPORATION**
**General Motors Building 3044 West Grand Boulevard**
**Detroit Michigan 48202 (US)**

(72) Inventor : **Anders, William Strader**
**5836 Ambassador, Apt J-3**
**Saginaw Michigan 48603 (US)**
Inventor : **Hallman, Steven James**
**152 Ivanhoe Drive, S-12**
**Saginaw Michigan 48603 (US)**

(74) Representative : **Breakwell, John Neil Bower et al**
**GM Patent Section Vauxhall Motors Limited Luton**
**Office (F6) P.O. Box No. 3 Kimpton Road**
**Luton Bedfordshire LU2 OSY (GB)**

## Description

This invention relates to a power-assisted rack and pinion steering gear as specified in the preamble of claim 1, for example as disclosed in US-A-4 415 054.

The invention is more particularly concerned with a power-assisted rack and pinion steering gear having an electric drive motor mounted to a rack housing and arranged to linearly drive a rack assembly as an output to provide electric power-assisted steering.

Prior to the present invention, various rack and pinion steering gears have incorporated electric motors for power-assisted steering, thereby effectively reducing the steering effort required and potentially improving driver comfort. These prior designs, although generally providing good steering-assist benefits, are generally complex and bulky constructions that are difficult to build and repair.

The prior designs as exemplified by the said US-A-4 415 054 further do not provide for central take-off as utilised in many vehicles, particularly compact front-wheel-drive vehicles requiring « high mount » of the steering gear to front compartment cowling or other support structure of a vehicle.

The present invention is concerned with achieving an electric power-assisted rack and pinion steering gear having end drive of the rack to provide packaging simplicity and allow use with a « high-mount » central take-off rack and pinion gear, preferably in the context of a no-lash, low-noise drive.

To this end a power-assisted rack and pinion steering gear in accordance with the present invention is characterised by the features specified in the characterising portion of claim 1.

A significant feature of a power-assisted rack and pinion steering gear in accordance with the present invention is that the nut is mounted for linear movement with the rack, and thereby acts as a carrier-like output member the linear movement of which imparts the necessary steering movement to the tie rods.

In contrast to what is the case with a power-assisted rack and pinion steering gear in accordance with the present invention, the prior designs discussed herein do not effectively rotatably power a screw to linearly drive a nut which effectively serves as a carrier or output for moving a pair of tie rods and associated dirigible wheels of a vehicle.

In a preferred arrangement of a power-assisted rack and pinion steering gear in accordance with the present invention, in contrast to prior designs the steering gear utilises a discrete and substantially conventional ball nut screw rotatably driven by an electric motor end-mounted to the housing assembly of the rack and pinion gear. This screw extends through and carries a linearly movable ball nut that forms an output of the steering gear unit. The ball nut is also drivingly attached to a rack that is arranged to be mechanically moved in translation by the vehicle operator by means of an associated pinion. The components of this power-assisted rack and pinion steering gear in accordance with the present invention are easily accessible and are readily repairable or replaceable, usually without the need for dismantling of the steering gear proper or substantial tear-down and rebuild of the gear. The electric motor-driven rotatable screw of this steering gear is adapted to telescope into a hollowed-out portion of the rack, to adaptability to a wide range of vehicle installations.

Among the distinctive characteristics of the preferred embodiment of the power-assisted rack and pinion steering gear in accordance with the present invention, as compared with prior-art electric power steering gears, is the incorporation of a planetary speed-reducing and torque-increasing mechanism, which may be either a set of involute gears or a traction drive, for driving a ball nut screw. A central take-off is provided by the ball nut mounted on the screw and operatively connected to one end of the rack. The electric motor is secured to one end of the rack and pinion housing assembly to provide power assist by way of the planetary reduction mechanism coaxially oriented with the electric motor and the ball nut screw. The output of the planetary unit is converted from angular motion of the ball screw to linear translation of the output member by the rack and ball nut assembly. Furthermore, the electric motor is conveniently screw-threaded into the end of the housing both to provide mechanical retention and to establish bearing preload. Backlash between the electric motor and the screw actuator can be reduced or eliminated with the planetary drive or gear set reduction as opposed to spur gear reductions. Gear noise is also greatly reduced.

Further, the steering gear can be substantially reduced in cost and be improved since a major portion of the housing can be of tubular steel stock forming an extension that is readily attached to a cast aluminium main housing. In this composite housing, the steel stock is easily pinned or otherwise attached to the end of the aluminium housing, and can be formed or cut with a track so that the nut of the ball nut and screw assembly can be used as a carrier which moves in translation in the track upon rotation of the screw.

A substantial advantage of a power-assisted rack and pinion steering gear in accordance with the present invention over conventional electric power-steering systems is a redistribution and reduction of volume generally required by electric power-assisted gears. In many cases, the concentric and end-mounted electric motor design permits installation of electric power steering in applications where an axially perpendicular electric motor or a concentric motor disposed around a central portion of the gear housing would be unduly bulky and would simply be unsuitable for vehicle use.

In the preferred embodiment of the invention, the electric drive motor is threadedly and concentrically mounted at one end of the steering gear housing with a selectively reversible output by way of planetary gearing which rotatably drives the ball nut screw by way of the carrier of the planetary gearing. The ball nut screw unit extends through the ball nut and is drivingly connected thereto by means of a conventional ball train and is linearly driven in response to powered rotation of the screw. Further, the screw telescopes into the interior of the rack to foreshorten the unit. A toothed section of the rack, which is attached at one end to the ball nut, meshes with a pinion gear that is rotatably driven by a steering shaft driven by the vehicle operator from a conventional steering wheel and shaft. The ball nut provides a linear sliding carrier that is connected to the tie rods for turning the dirigible wheels of the vehicle. A control system senses the direction and torque load from the vehicle operator to control the direction and output of the electric motor for effective power-assisted steering. With this design, a foreshortened and low profile is effectively provided, preferably with a central take-off suitable for a wide range of vehicle applications.

The present invention thus makes available a new and improved electrically driven power-assisted rack and pinion steering gear incorporating a discrete, rotatably-driven screw that forms part of a nut and rack assembly and drives a nut in a linear path, with the screw being operatively connected to a reversible drive motor and with the nut being operatively connected to mechanical input by way of a pinion-driven rack that is manually moved in translation by the vehicle operator.

The invention also makes available a new and improved electric power-assisted rack and pinion steering gear having a concentric end-mounted electric motor driving a ball nut screw on which the ball nut is operatively mounted for movement in a linear path and which is connected to a manually powered rack and provides the carrier for a central take-off that is attached by means of tie rods to the steerable wheels of the vehicle.

In the drawings :

Figure 1 is a somewhat schematic front elevational view illustrating an electric power-assisted rack and pinion steering gear in accordance with the present invention ;

Figure 2 is an enlarged view, with parts shown broken away and in section, generally on the line 2-2 of Figure 1, in the direction of the arrows ;

Figure 3 is a further enlarged view, partly in section, of the electric drive motor and a planetary drive system of a first embodiment of a rack and pinion steering gear in accordance with the present invention ; and

Figure 4 is a view similar to the view of Figure 3 but illustrating a second embodiment of a rack and pinion steering gear in accordance with the present invention.

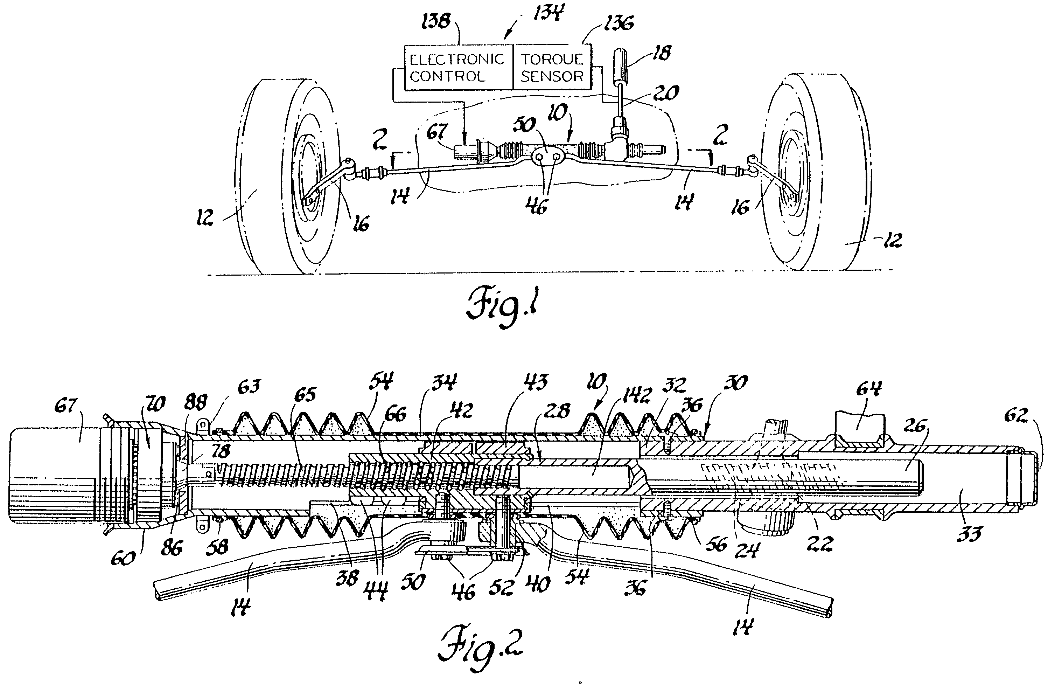

With reference now to the drawings, there is shown in Figure 1 a rack and pinion steering gear 10 that is operatively connected to a pair of dirigible road wheels 12 of a vehicle by means of tie rod assemblies 14 and steering arms 16 connected thereto. The steering gear 10 can receive mechanical input by way of a steering shaft assembly 18 that incorporates a torsion bar 20 adapted to be turned by a vehicle operator by actuation of a conventional steering wheel, not illustrated. The steering shaft assembly 18 is drivingly connected to a pinion gear 22 that is operatively mounted in a gear housing to be described. The teeth of the pinion gear mesh with the teeth 24 of an elongate rack 26 forming part of a ball nut and rack assembly 28 that is mounted for linear sliding movement in a composite housing assembly 30. This housing assembly includes a cast aluminium main housing 32 with a cylindrical passage 33 therethrough, and a tubular steel extension 34 attached to the main housing by means of threaded fasteners 36.

With this rack and pinion arrangement, rotation of the pinion gear 22 by the vehicle operator by actuation of the steering wheel, with consequent rotation of the steering shaft assembly, will cause lateral sliding movement of the ball nut and rack assembly 28 to the left or to the right within the housing assembly, according to the direction of steering input, to effect selective steering of the road wheels 12 with or without power assistance.

The tubular extension 34 of the steering gear housing assembly has an elongate rectilinear opening 38, the side edges 40 of which form laterally spaced tracks for the ball nut 42 of the ball nut and rack assembly 28. The ball nut has projections 44 extending radially therefrom which fit between the tracks for rotational retention and linear guidance of the ball nut 42. A support slide 43 is fixed to the nut and rack assembly for supporting these elements in the tubular extension.

The ball nut 42 of this assembly provides a slidable and non-rotatable central take-off carriage operating with low friction in the track 40. The inboard ends of the tie rods 14 are operatively connected to the ball nut 42 by means of bolts 46. As is shown in Figure 2, the bolts project through a front plate 50 and through cylindrical bushings 52 in the ends of the tie rods 14 and into threaded connection with the ball nut 42. An elongate convoluted boot 54 of elastomeric material stretches over the housing from an end clamp 56 adjacent the pinion gear 22 to an end clamp 58 adjacent an enlarged end 60 of the tubular extension 34. With this boot 54, and with an end cover 62 mounted in the open end of the main housing 32, the internal components of the steering gear are enclosed and protected from outside dirt, moisture and other foreign elements.

The housing assembly is attached to a forward bulkhead of the vehicle by means of conventional clamps 63 and 64.

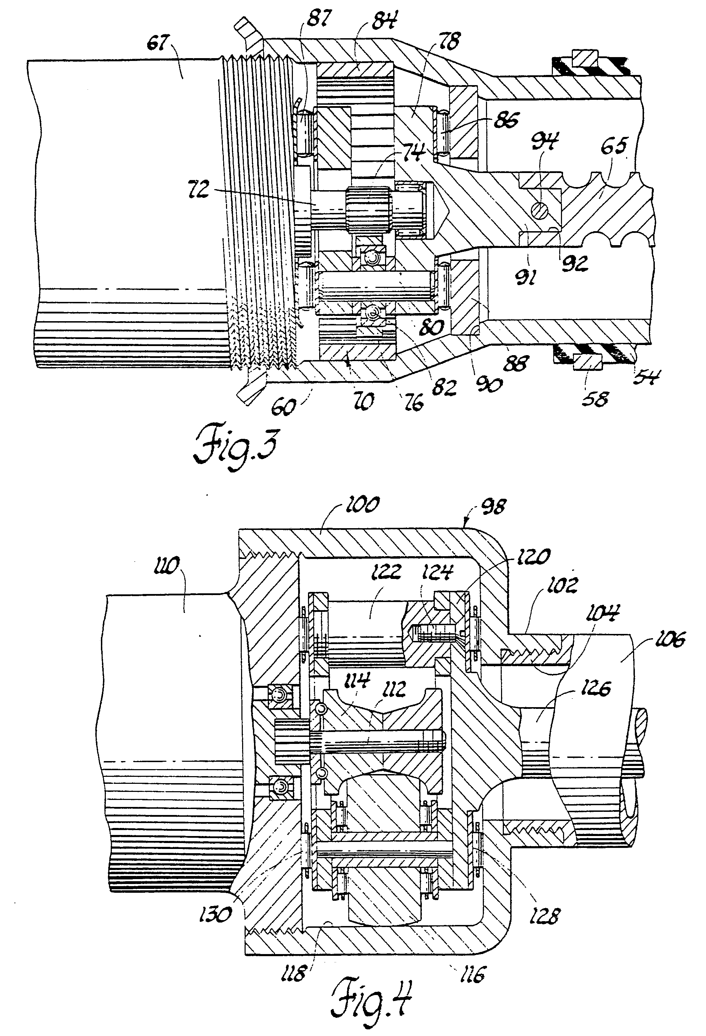

In addition to receiving manual sliding input from the operator-driven rack, the ball nut 42 is driven by an elongate ball nut screw 65 having a conventional ball train 66 drivingly interconnecting these members. The ball nut screw is driven by an electric motor 67 which is adjustably threaded into the cylindrical, enlarged end 60 of the tubular extension 34. To provide a reduced output speed speed and increased output torque from the electric motor 67, a planetary gear set 70 is drivingly connected between the electric motor 67 and the ball nut screw 65. As is shown in Figure 3, the electric motor 67 has an output shaft 72 on which a sun gear 74 is mounted. This sun gear meshes with planetary gears 76 that are operatively mounted on a carrier 78 by means of pins 80 and bearings 82. The planetary gears 76 mesh with a ring gear 84 that is press-fitted or otherwise fixed for reaction in the enlarged end 60 of the housing extension 34.

Thrust bearings 86 are operatively disposed between the inboard side of the carrier 78 and a thick washer-like spacer 88 located on an internal shoulder 90. The thrust bearing 87 is mounted between the carrier 78 and the end face of the electric motor 67. With this arrangement, a selected preload can be applied by screw-threaded adjustment of the electric motor 67 into or out of the enlarged end 60 of the housing extension 34.

With this planetary arrangement, there is geared speed reduction and increased torque from the motor to the rotatably driven ball nut screw 65 via the carrier output, which includes a polygonal drive extension 91 fitted into a socket 92 in the end of the screw 65. This connection is further secured by means of a pin 94.

Figure 4 shows a unit 98 which includes an enlarged housing 100 having a neck 102 that is internally threaded and is screw-threaded on to the outer threaded end 104 of a tubular extension 106 which corresponds to the extension 34 shown in Figures 2 and 3. An electric motor 110 is screw-threaded into the enlarged housing 100 and has an output shaft 112 which drives a sun gear element 114, and this sun gear element 114 drives planetary elements 116 which walk on the inside wall 118 of the enlarged housing 100, this housing 100 providing the reaction element for this planetary unit.

The planetary elements are operatively mounted on a carrier assembly 120 which includes cylindrical spacers 122 connected by means of screws 124 to an output shaft 126 of the carrier assembly 120, the output shaft 126 being drivingly connected to the end of the ball nut screw, as described in connection with Figure 2. Thrust bearings 128 and 130 are provided as previously described in connection with Figure 3, with the electric motor 110 being adjustably threaded into the housing 100 for providing a required preload.

Steering-assist controls 134 include a torque sensor 136 which picks up an indication of steering direction and effort from the torsion bar 20, providing input to an electronic control 138 that energises the electric motor 67 or 110 with the appropriate direction and output. The ball nut and screw has a left-hand thread, so that counterclockwise rotation of the electric motor provides for telescoping of the screw into the elongate recess 142 in the rack, to foreshorten the overall length of the design. When mechanical steering effort is terminated, input torque is likewise terminated, so that power-assisted steering is correspondingly terminated. If the steering wheel is released, the geometry of the steering linkage system will return the steering wheels to the straight-ahead position.

If desired, the ball nut and the ball nut screw, together with the ball train drivingly interconnecting these members, can be replaced by a plain nut and screw having interengaging threads.

## Claims

1. A power-assisted rack and pinion steering gear for steering the dirigible wheels of a vehicle, including a rack housing (30), an elongate steering gear rack (26) disposed for linear movement within the housing (30), a rotatable pinion gear (22) arranged to be turned by a vehicle operator and operatively meshing with the rack (26) to provide a manual input for linearly moving the rack (26), connector means (14) operatively connecting the rack (26) to the dirigible wheels (12) of the vehicle for effecting steering movement of the wheels (12) in response to the linear movement of the rack (26), an electric motor (67) mounted on the housing (30), a nut (42), and an elongate screw (65) connected at one end to the rack (26) in alignment therewith and operatively extending into the nut (42), characterised in that the nut (42) is mounted within the housing adjacent one end of the rack (26) for linear movement therewith and forms a part of the connector means (14) that operatively connects the rack (26) to the dirigible wheels (12) of the vehicle, the screw comprises a rotatable screw (65), and the electric motor (67) is mounted at one end of the housing (30) for rotatably driving the screw (65) by way of one end connection (78 ; 120) thereof to thereby linearly move the nut (42), in response to a predetermined mechanical input applied to the pinion gear (22) by the vehicle operator, for power-assisted steering.

2. A power-assisted rack and pinion steering gear according to claim 1, characterised in that the nut (42) comprises a ball nut, the rotatable screw (65) comprises a ball nut screw, and ball train means (66) drivingly interconnects the ball nut screw (65) and the ball nut (42).

3. A power-assisted rack and pinion steering gear according to claim 2 characterised in that the housing (30) has an internally threaded open end (60), and the electric motor (67) has a screw-threaded connection to the internally threaded open end (60) of the housing (30).

4. A power-assisted rack and pinion steering gear according to claim 1 or 2, characterised in that a planetary unit (70) is interposed between the electric motor (67) and the rotatable screw (65) for supplying a reduced input speed and increased input torque to the rotatable screw (65).

5. A power-assisted rack and pinion steering gear according to claim 4, characterised in that the planetary unit (70) comprises a friction-drive planetary unit.

6. A power-assisted rack and pinion steering gear according to claim 4 or 5, characterised in that the housing (30) has an internally threaded open end (60), and the electric motor (67) has a screw-threaded connection to the internally threaded open end (60) of the housing (30).

7. A power-assisted rack and pinion steering gear according to claim 6, characterised in that the screw-threaded connection between the electric motor (67) and the housing (60) permits axial adjustment movement of the electric motor (67) relative to the housing (30) for providing desired preloading of thrust bearing means (87, 86) that are operatively interposed between the electric motor (67) and the planetary unit (70) and between the planetary unit (70) and the housing (30).

8. A power-assisted rack and pinion steering gear according to any one of claims 1 to 7, characterised in that the housing (30) comprises a composite housing.

9. A power-assisted rack and pinion steering gear according to any one of claims 1 to 8, characterised in that the nut (42) is rigidly secured to the rack (26) for linear movement therewith, the connector means (14) includes linkage means (43, 46, 50) operatively connecting the nut (42) to the tie rods (14) to effect the steering movement of the dirigible wheels (12) of the vehicle, and an end portion of the screw (65) extends telescopically into an elongate recess (142) in the rack (26).

10. A power-assisted rack and pinion steering gear according to any one of claims 1 to 9, characterised in that the electric motor (67) is operative, in response to a predetermined input force applied by the vehicle operator to the pinion gear (22), for rotatably driving the screw (65) for power-assisted steering.

11. A power-assisted rack and pinion steering gear according to any one of claims 1 to 10, characterised in that the housing (30) has an elongate rectilinear opening (38) having side edges (40) which form laterally spaced tracks for the nut (42), and the nut (42) has projections (44) extending radially therefrom which fit between the tracks for rotational retention and linear guidance of the nut (42).

**Patentansprüche**

1. Hilfskraftunterstütztes Zahnstangen-Lenkgetriebe zum Lenken der richtbaren Räder eines Fahrzeuges, mit einem Zahnstangengehäuse (30), einer länglichen Lenkgetriebe-Zahnstange (26), die in dem Gehäuse (30) linear bewegbar angeordnet ist, einem drehbaren Zahnritzel (22), das angeordnet ist, durch einen Fahrzeug-Betreiber gedreht zu werden und wirksam mit der Zahnstange (26) zu kämmen, um eine Handbetätigungs-Eingabe zur Linearbewegung der Zahnstange (26) zu schaffen, Verbindermittel (14), welche die Zahnstange (26) wirksam mit den richtbaren Rädern (12) des Fahrzeuges verbinden, um Lenkbewegung der Räder (12) in Abhängigkeit von der Linearbewegung der Zahnstange (26) zu bewirken, einem an dem Gehäuse (30) angebrachten Elektromotor (67), einer Mutter (42) und einer länglichen Schraube (65), die an einem Ende mit der Zahnstange (26), damit ausgerichtet, verbunden ist und sich wirksam in die Mutter (42) erstreckt, dadurch gekennzeichnet, daß die Mutter (42) innerhalb des Gehäuses einem Ende der Zahnstange (26) benachbart zur Linearbewegung mit dieser angebracht ist und einen Teil des Verbindermittels (14) bildet, das wirksam die Zahnstange (26) mit den richtbaren Rädern (12) des Fahrzeuges verbindet, daß die Schraube eine drehbare Schraube (65) umfaßt und daß der Elektromotor (67) an einem Ende des Gehäuses (30) angebracht ist, um die Schraube (65) in Drehrichtung über eine Endverbindung (78 ; 120) derselben anzutreiben, um dadurch die Mutter (42) linear zu bewegen in Abhängigkeit von einer vorbestimmten mechanischen Eingabe, die durch den Betreiber des Fahrzeuges auf das Zahnritzel (22) gegeben wird zur hilfskraftunterstützten Lenkung.

2. Hilfskraftunterstütztes Zahnstangen-Lenkgetriebe nach Anspruch 1, dadurch gekennzeichnet, daß die Mutter (42) eine Kugelmutter umfaßt, daß die drehbare Schraube (65) eine Kugelmutter-Spindel umfaßt, und daß Kugelzugmittel (66) antreibend die Kugelmutterspindel (65) und die Kugelmutter (42) miteinander verbinden.

3. Hilfskraftunterstütztes Zahnstangen-Lenkgetriebe nach Anspruch 2, dadurch gekennzeichnet, daß das Gehäuse (30) ein offenes, mit Innengewinde versehenes Ende (60) besitzt und daß der Elektromotor (67) eine mit Außengewinde versehene Verbindung zu dem mit Innengewinde versehenen offenen Ende (60) des Gehäuses (30) besitzt.

4. Hilfskraftunterstütztes Zahnstangen-Lenkgetriebe nach Anspruch 1 oder 2, dadurch gekennzeichnet, daß eine Planeten-Getriebeeinheit (70) zwischen den Elektromotor (67) und der drehbaren Schraube (65) eingesetzt ist, um der drehbaren Schraube (65) eine reduzierte Eingangsdrehzahl und ein erhöhtes Eingangsdrehmoment zuzuführen.

5. Hilfskraftunterstütztes Zahnstangen-Lenkgetriebe nach Anspruch 4, dadurch gekennzeichnet, daß die Planeten-Getriebeeinheit (70) eine reibungsgetriebene Planeten-Getriebeeinheit ist.

6. Hilfskraftunterstütztes Zahnstangen-Lenkgetriebe nach Anspruch 4 oder 5, dadurch gekennzeichnet, daß das Gehäuse (30) ein mit Innengewinde versehenes offenes Ende (60) besitzt, und daß der Elektromotor (67) eine mit Außengewinde versehene Verbindung mit dem mit Innengewinde versehenen offenen Ende (60) des Gehäuses (30) besitzt.

7. Hilfskraftunterstütztes Zahnstangen-Lenkgetriebe nach Anspruch 6, dadurch gekennzeichnet, daß die mit Außengewinde versehene Verbindung zwischen dem Elektromotor (67) und dem Gehäuse (60) eine axiale Einstellbewegung des Elektromotors (67) relativ zum Gehäuse (30) zuläßt zum Schaffen einer erwünschten Vorbelastung von Schublagermitteln (87, 86), die wirksam zwischen den Elektromotor (67) und die Planeten-Getriebeeinheit (70), und zwischen die Planeten-Getriebeeinheit und das Gehäuse (30) eingesetzt sind.

8. Hilfskraftunterstütztes Zahnstangen-Lenkgetriebe nach einem der Ansprüche 1 bis 7, dadurch gekennzeichnet, daß das Gehäuse (30) ein zusammengesetztes Gehäuse umfaßt.

9. Hilfskraftunterstütztes Zahnstangen-Lenkgetriebe nach einem der Ansprüche 1 bis 8, dadurch gekennzeichnet, daß die Mutter (42) starr an der Zahnstange (26) zur Linearbewegung mit dieser befestigt ist, daß die Verbindermittel (14) Gelenkmittel (43, 46, 50) enthalten, die wirksam die Mutter (42) mit den Zugstäben (14) verbinden, um eine Lenkbewegung der richtbaren Räder (12) des Fahrzeuges zu bewirken und daß ein Endabschnitt der Schraube (65) sich teleskopartig in eine längliche Vertiefung (142) in der Zahnstange (26) erstreckt.

10. Hilfskraftunterstütztes Zahnstangen-Lenkgetriebe nach einem der Ansprüche 1 bis 9, dadurch gekennzeichnet, daß der Elektromotor (67) in Abhängigkeit von einer vorbestimmten, durch den Betätiger des Fahrzeuges auf das Zahnritzel (42) ausgeübten Eingangskraft zum drehbaren Antreiben der Schraube (65) zum Hilfskraftunterstützten Lenken betätigbar ist.

11. Hilfskraftunterstütztes Zahnstangen-Lenkgetriebe nach einem der Ansprüche 1 bis 10, dadurch gekennzeichnet, daß das Gehäuse (30) eine länglich-rechtwinklige Öffnung (38) besitzt, mit Seitenkanten (40), die in Querrichtung mit Abstand versehene Bahnen für die Mutter (42) bilden, und daß die Mutter (42) radial von dieser abstehende Fortsätze (44) besitzt, die zwischen die Bahnen zur Dreh-Rückhaltung und Linear-Führung der Mutter (42) passen.

**Revendications**

1. Mécanisme de direction assistée à pignon et crémaillère destiné à orienter les roues directrices d'un véhicule, comprenant un boîtier de crémaillère (30), une crémaillère de direction (26) de grande longueur, disposée pour décrire un mouvement linéaire à l'intérieur du boîtier (30), un pignon rotatif (22) agencé pour être tourné par le conducteur du véhicule et qui engrène fonctionnellement avec la crémaillère (26) pour fournir une entrée manuelle pour le déplacement linéaire de la crémaillère (26), des moyens d'accouplement (14) qui accouplent fonctionnellement la crémaillère (26) aux roues directrices (12) du véhicule pour effectuer le mouvement de braquage des roues (12) en réponse au déplacement linéaire de la crémaillère (26), un moteur électrique (67) monté sur le boîtier (30), un écrou (42) et une vis de grande longueur (65) fixée à la crémaillère (26) par une extrémité dans l'alignement de cette crémaillère et qui est vissée dans l'écrou (42), caractérisé en ce que l'écrou (42) est monté dans le boîtier à proximité d'une extrémité de la crémaillère (26) pour décrire un mouvement linéaire avec cette crémaillère et qui fait partie des moyens d'accouplement (14) qui accouplent fonctionnellement la crémaillère (26) aux roues directrices (12) du véhicule, la vis est constituée par une vis tournante (65) et le moteur électrique (67) est monté à une extrémité du boîtier (30) pour entraîner la vis (65) en rotation au moyen de son raccordement d'extrémité (78 ; 120), pour déplacer linéairement l'écrou (42) en réponse à une entrée mécanique prédéterminée appliquée au pignon (22) par le conducteur du véhicule, pour effectuer un mouvement de direction assistée.

2. Mécanisme de direction assistée à pignon et crémaillère, selon la revendication 1, caractérisé en ce que l'écrou (42) est constitué par un écrou à billes, la vis tournante (65) est constituée par une vis d'écrou à billes, et des moyens (66) constitués par un train de billes accouplent cinématiquement la vis d'écrou à billes (65) à l'écrou à billes (42).

3. Mécanisme de direction assistée à pignon et crémaillère, selon la revendication 2, caractérisé en ce que le boîtier (30) présente une extrémité ouverte (60) filetée intérieurement et le moteur électrique (67) est accouplé à l'extrémité ouverte (60) filetée intérieurement du boîtier (30) par un assemblage vissé.

4. Mécanisme de direction assistée à pignon et crémaillère selon la revendication 1 ou la revendication 2, caractérisé en ce qu'une unité épicycloïdale (70) est interposée entre le moteur électrique (67) et la vis tournante (65) pour appliquer à la vis tournante (65) une vitesse d'entrée réduite et un couple d'entrée multiplié.

5. Mécanisme de direction assistée à pignon et crémaillère selon la revendication 4, caractérisé en ce qu'une unité épicycloïdale (70) est constituée par une unité épicycloïdale à friction.

6. Mécanisme de direction assistée à pignon et crémaillère selon la revendication 4 ou la revendication 5, caractérisé en ce que le boîtier (30) présente une extrémité ouverte (60) filetée intérieurement, et le moteur électrique (67) est accouplé à l'extrémité ouverte (60), filetée intérieurement, du boîtier (30) par un assemblage vissé.

7. Mécanisme de direction assistée à pignon et crémaillère selon la revendication 6, caractérisé en ce que l'assemblage vissé entre le moteur électrique (67) et le boîtier (60) permet d'imprimer au moteur électrique (67) un mouvement de réglage axial par rapport au boîtier (30) pour établir une précontrainte désirée des moyens de palier de butée (85, 86) qui sont interposés fonctionnellement entre le moteur électrique (67) et l'unité épicycloïdale (70) et entre l'unité épicycloïdale (70) et le boîtier (30).

8. Mécanisme de direction assistée à pignon et crémaillère selon l'une quelconque des revendications 1 à 7, caractérisé en ce que le boîtier (30) comprend un boîtier composite.

9. Mécanisme de direction assistée à pignon et crémaillère selon l'une quelconque des revendications 1 à 8, caractérisé en ce que l'écrou (42) est fixé rigidement à la crémaillère (26) pour décrire un mouvement linéaire conjointement avec la crémaillère, les moyens d'accouplement (14) comprennent des moyens de tringlerie (43, 46, 50) qui accouplent fonctionnellement l'écrou (42) aux barres d'accouplement (14) pour effectuer le mouvement de braquage des roues directrices (12) du véhicule et une portion d'extrémité de la vis (65) est engagée télescopiquement dans un évidement (142) de forme allongée de la crémaillère (26).

10. Mécanisme de direction assistée à pignon et crémaillère selon l'une quelconque des revendications 1 à 9, caractérisé en ce que le moteur électrique (67) a pour action, en réponse à une force d'entrée prédéterminée appliquée au pignon (22) par le conducteur du véhicule, d'entraîner la vis (65) en rotation pour effectuer l'action de braquage assistée.

11. Mécanisme de direction assistée à pignon et crémaillère selon l'une quelconque des revendications 1 à 10, caractérisé en ce que le boîtier (30) présente une ouverture rectiligne (38) de grande longueur munie de bords latéraux (40) qui forment des glissières espacées latéralement pour l'écrou (42), et l'écrou (42) possède des protubérances (44) qui font saillie radialement sur cet écrou et qui s'ajustent entre les glissières pour assurer le blocage en rotation et le guidage linéaire de l'écrou (42).

Fig.1

Fig.2

Fig.3

Fig.4